# EUROPÄISCHE PATENTSCHRIFT

(11) **EP 1 153 834 B1**
(45) Veröffentlichungstag und Bekanntmachung des Hinweises auf die Patenterteilung: **10.09.2003**
(21) Anmeldenummer: 01103059.0
(22) Anmeldetag: 09.02.2001
(51) Int. Cl.: B65B 29/02, B65B 61/12, B26F 3/00

(54) **VERFAHREN ZUR KONTINUIERLICHEN HERSTELLUNG VON AUFGUSSBEUTELN**
METHOD FOR CONTINUOUSLY MANUFACTURING INFUSION BAGS
PROCEDE POUR LA FABRICATION CONTINUE DE SACHETS D' INFUSION

(30) Priorität: 11.05.2000 EP 00109939
(43) Veröffentlichungstag der Anmeldung: 14.11.2001
(73) Patentinhaber: TEEPACK SPEZIALMASCHINEN GMBH & CO. KG, D-40667 Meerbusch (DE)
(72) Erfinder: Lohrey, Wilhelm, 40668 Meerbusch 3 (DE); Lambertz, Stefan, Dr., 50354 Hürth (DE); Groth, Wolfgang, 41844 Wegberg (DE); Maier, Rolf, 70499 Stuttgart (DE)
(74) Vertreter: Stenger, Watzke & Ring Patentanwälte

(56) Entgegenhaltungen:
- EP-A- 0 716 036
- GB-A- 1 224 170
- GB-A- 2 075 468
- US-A- 5 466 474

## Beschreibung

Die vorliegende Erfindung betrifft ein Verfahren zur kontinuierlichen Herstellung von Aufgußbeuteln, insbesondere zur Bereitung von Tee, mit einer Aufhängung aus bahnförmigem Trägermaterial und mit wenigstens einer aus Filterpapiermaterial bestehenden, allseitig geschlossenen, mindestens ein Substanzquantum enthaltenden und mit der Aufhängung verbundenen Kammer, durch Ablegen einzelner Substanzquanten auf einer Filterpapierbahn, Bildung eines Schlauches, Ausbildung wenigstens eines Kammerstrangs aus nacheinander zusammenhängenden, durch eine Quernaht jeweils geschlossenen, ein Substanzquantum enthaltenden Kammern, wobei die Quernaht zugleich die hintere Naht der einen und die vordere Naht der nachfolgenden Kammer ist und eine zwischen den beiden Nähten liegende Perforation umfaßt, an der die Kammern im Verlauf des Verfahrens getrennt werden, Trennen einer Kammer vom Kammerstrang, Verbinden der Kammer des Kammerstrangs mit einem Trägermaterialstrang und Trennen der Aufhängung vom Trägermaterialstrang.

Verfahren und Vorrichtungen zum kontinuierlichen Herstellen von Aufgußbeuteln sowie entsprechende Aufgußbeutel sind in zahlreichen Ausführungen bekannt. Bei einer der bekannten Ausführungen werden auf einer Filterpapierbahn einzelne Substanzquanten einer auszulaugenden Substanz abgelegt und wird anschließend ein Schlauch gebildet, der durch Quersiegelungen in einzelne allseitig geschlossene, jeweils ein Substanzquantum enthaltende Kammern unterteilt wird. Die Schlauchbildung kann dabei durch überlappendes Falten der Filterpapierbahn und Verschließen mittels einer Längsnaht oder durch Zuführen einer weiteren Filterpapierbahn und Anbringen von zwei Längsnähten erfolgen. Die Kammern werden schließlich an einem Trägermaterial befestigt, das zur Handhabung und Aufhängung des Aufgußbeutels dient.

Der Erfindung liegt die **Aufgabe** zugrunde, ein einfaches Verfahren zur kontinuierlichen Herstellung von Aufgußbeuteln der eingangs genannten Art zu schaffen, welches mit hoher Geschwindigkeit zuverlässig arbeitet und eine kostengünstige Herstellung von Aufgußbeuteln ermöglicht.

Die Aufgabe wird erfindungsgemäß dadurch **gelöst**, daß zum Trennen einer Kammer von dem Kammerstrang der kontinuierlich bewegte Kammerstrang in einer vorbestimmten Position nahe der Perforation der zu trennenden Kammer gegriffen **wird** und **die gegriffene, vom Kammerstrang abzutrennende Kammer** einer Beschleunigung in Bewegungsrichtung des Kammerstrangs unterzogen wird, derart, daß durch die Relativbewegung die Kammer vom Kammerstrang abgetrennt wird.

Vorteilhafterweise wird zum Trennen einer Kammer von dem Kammerstrang der Kammerstrang einem kontinuierlich umlaufenden, mit Ausnehmungen für einzelne Kammern versehenen Rad zugeführt, die Längsseiten der vom Kammerstrang zu trennenden Kammer von seitlich des Rades angeordneten Zangen ergriffen und durch Relativbewegung der Zangen zu dem Rad die Kammer vom Kammerstrang abgetrennt.

Erfindungsgemäß werden die Kammern des Kammerstrangs dabei durch Auseinanderziehen an der Perforation vereinzelt. Die verfahrensgemäße Abtrennung erlaubt dabei einen Betrieb mit einer hohen Maschinentaktzahl, so daß sich vorteilhafterweise 800 bis 1500 Aufgußbeutel pro Minute, besonders bevorzugt 1.000 bis 1.200 Aufgußbeutel pro Minute herstellen lassen. Vorteilhafterweise sind die Zangen in Umlaufrichtung des Rades schwenkbar und werden zum Erzeugen der Relativbewegung in Umlaufrichtung des Rades beschleunigt, bevorzugt über eine Kurvensteuerung. Vorteilhafterweise wird eine in Bewegungsrichtung des Kammerstrangs vordere abzutrennende Kammer gegriffen bevor die in Bewegungsrichtung nachfolgende Kammer gegriffen wird, wobei die in Bewegungsrichtung vordere Kammer in Bewegungsrichtung des Kammerstrangs beschleunigt wird, wenn die nachfolgende Kammer des Kammerstrangs gegriffen wird. In einer weiteren Ausgestaltung der Erfindung greifen in Umlaufrichtung des Rades vordere Zangen eine vom Kammerstrang abzutrennende Kammer bevor die in Umlaufrichtung nachfolgenden Zangen die nachfolgende Kammer des Kammerstrangs greifen, wobei die vorderen Zangen in Umlaufrichtung des Rades beschleunigt werden, wenn die hinteren Zangen die nachfolgende Kammer des Kammerstrangs greifen. Die Steuerung der Zangen hinsichtlich der Greifbewegung erfolgt vorteilhafterweise über eine Kurvensteuerung.

Vorteilhafterweise werden die Kammern mit einem Abstand zueinander mit dem Trägermaterialstrang verbunden. Dabei wird der Abstand aufgrund des Auseinanderziehens durch die Relativbewegung der Zangen zu dem Rad im Rahmen des Abtrennens einer Kammer vom Kammerstrang erzeugt und sind die Kammern beabstandet voneinander, vorzugsweise um wenige Millimeter entfernt, am Trägermaterialstrang angeordnet, so daß die vereinzelten Kammern an einem um den Vereinzelungsspalt längeren Abschnitt des Trägermaterialstrangs befestigt werden, wobei der Abschnitt später die Aufhängung des Aufgußbeutels bildet. In einer weiteren Ausgestaltung wird zur Abstandsbildung der Trägermaterialstrang vorteilhafterweise dem Rad mit einer größeren Geschwindigkeit zugeführt als der Kammerstrang.

In einer vorteilhaften Ausgestaltung der Erfindung werden die Kammern beim Trennen in den Ausnehmungen des Rades gehalten, vorzugsweise durch Luftansaugung mittels Unterdruck. Verfahrensgemäß werden dadurch die einzelnen Kammern des Kammerstrangs in den Ausnehmungen des Rades positioniert und fixiert. Darüber hinaus werden die Substanzquanten in den Kammern hierdurch gleichmäßig verteilt. In einer weiteren vorteilhaften Ausgestaltung der Erfindung werden die Kammern mit oder nach dem Verbinden mit dem Trägermaterialstrang aus den Ausnehmungen des Rades herausgedrückt, vorzugsweise durch Herausblasen. Dadurch wird sichergestellt, daß die Kammern nicht in den Ausnehmungen des Rades hängen bleiben, was den Herstellungsablauf behindern bzw. stören könnte.

Vorteilhafterweise wird die Quernaht durch Verschweißen hergestellt, bevorzugt mittels Ultraschall. Dabei wird zweckmäßigerweise die zwischen den beiden Nähten der Quernaht liegende Perforation mit oder nach dem Ausbilden der Quernaht ausgebildet. Vorzugsweise wird die Perforation gleichzeitig mit der Quernaht durch Ultraschall hergestellt. Mit dem erfindungsgemäßen Verfahren erfolgt dabei stets die Ausbildung geometrisch identischer Quernähte, wodurch sich das Verfahren erheblich vereinfacht. In einer weiteren vorteilhaften Ausgestaltung der Erfindung wird die Perforation nach dem Verschweißen der Quernaht durch wenigstens ein rotierendes Messer mit einer an separaten Stellen unterbrochenen Schneide ausgebildet. Das separate Perforieren erhöht dabei die Lebensdauer und Qualität der mittels Ultraschallschweißen gefertigten Quernaht.

Vorteilhafterweise wird der im Verlauf des Verfahrens die Aufhängung des Aufgußbeutels ausbildende Trägermaterialstrang dem Rad zugeführt, wobei die vom Kammerstrang abgetrennte Kammer mit dem Abtrennen oder anschließend durch Schweißen verbunden wird, vorzugsweise mittels Ultraschall.

In einer besonders vorteilhaften Ausgestaltung der Erfindung werden je eine Kammer zweier Kammerstränge an einer gemeinsamen Kante mit der Aufhängung verbunden, wobei eine der Kammern eines ersten Kammerstrangs entlang einer zu bildenden Kante mit einer Seite des Trägermaterialstrangs und eine der Kammern eines zweiten Kammerstrangs entlang der zu bildenden Kante mit der gegenüberliegenden Seite des Trägermaterialstrangs verbunden wird. Vorteilhafterweise wird zunächst eine der Kammern eines ersten Kammerstrangs entlang einer zu bildenden Kante mit einer Seite des Trägermaterialstrangs verbunden und anschließend eine der Kammern eines zweiten Kammerstrangs entlang der zu bildenden Kante mit der gegenüberliegenden Seite des Trägermaterialstrangs verbunden.

Zum Transport der mit dem Trägermaterialstrang verbundenen Kammern wird der Trägermaterialstrang in einer vorteilhaften Ausgestaltung der Erfindung an bestimmten Stellen gegriffen und in Transportrichtung gezogen. Vorteilhafterweise wird der Trägermaterialstrang dabei im Bereich der Verbindung mit den Kammern gegriffen, bevorzugt im Bereich der Verbindung jeder zweiten Kammer, besonders bevorzugt im Bereich der Verbindung jeder vierten Kammer. Vorteilhafterweise wird zum Transport ein mit voneinander beabstandeten Nocken versehener Riemen verwendet, dessen Nocken den Trägermaterialstrang erfassen und durch Bewegung des Riemens transportieren.

In einer besonders vorteilhaften Ausgestaltung der Erfindung wird zum Transport ein gesteuertes Doppelriemensystem verwendet, wobei wechselweise die Nocken des einen Riemens den Trägermaterialstrang transportieren während die Nocken des zweiten Riemens zur anschließenden Übernahme des Weitertransports in eine Transportposition gebracht werden. Gemäß einem besonders vorteilhaften Vorschlag der Erfindung ist die Riemenbewegung druckmarkengesteuert, wobei die Druckmarken bevorzugt auf dem Trägermaterialstrang angeordnet sind. Vorteilhaft werden die Kammern im Bereich der Druckmarken am Trägermaterialstrang angebracht, wobei nach Anbringung einer Kammer der Bereich der Befestigung der Kammer am Trägermaterialstrang zur Steuerung der Riemenbewegung genutzt wird, so daß quasi eine mittelbare Druckmarkensteuerung gegeben ist. Die Verwendung eines gesteuerten Doppelriemensystems, insbesondere druckmarkengesteuert, erlaubt einen absolut positionsgenauen Transport des mit Kammern versehenen Trägermaterialstrangs. Dabei werden durch die mit beabstandeten Nocken versehenen Doppelriemen aufgrund von Toleranzen und Abweichungen gegebenen und zu einem Versatz führenden Probleme hinsichtlich einer Teilungsabstimmung der Position der Verbindung einer Kammer am Trägermaterialstrang ausgeglichen und beseitigt. Verfahrensgemäß fährt ein erster Riemen des Doppelriemensystems druckmarkengesteuert über Servomotoren in Trransportposition und transportiert den mit Kammern versehenen Trägermaterialstrang ein Stück weiter. In dieser Zeit sind die zum Transport vorgesehenen Nocken des zweiten Riemens außer Eingriff und werden rechtzeitig in die für den weiteren Transport des mit Kammern versehenen Trägermaterialstrangs vorgesehene Weitertransportposition verbracht. Bei dieser Suche wird die Geschwindigkeit des zweiten Riemens über Servomotoren geregelt, wobei die Servomotoren beispielsweise über einen optischen Sensor Druckmarken auf dem Trägermaterialstrang erfassen und die Geschwindigkeit des zweiten Riemens entsprechend anpassen, so daß die Nocken des zweiten Riemens in Transportposition gebracht werden und den mit Kammern versehenen Trägermaterialstrang erfassen und transportieren. Sobald der mit Kammern versehene Trägermaterialstrang von den Nocken des zweiten Riemens erfaßt wird, sind die Nocken des ersten Riemens außer Eingriff und werden entsprechend in ihre neue Greifposition verbracht.

Zum Trennen des die Aufhängung des Aufgußbeutels bildenden Abschnitts vom Trägermaterialstrang wird der Trägermaterialstrang vorteilhafterweise im Bereich der Verbindung mit den Kammern perforiert und an einer vorbestimmten Position nahe der Perforation gegriffen und einer Beschleunigung in Bewegungsrichtung des Trägermaterialstrangs unterzogen, derart, daß durch die Relativbewegung die Aufhängung eines so hergestellten Aufgußbeutels vom Trägermaterialstrang abgetrennt wird. Vorteilhafterweise wird der Trägermaterialstrang einem kontinuierlich umlaufenden Rad zugeführt, wobei der Trägermaterialstrang von am Rad angeordneten Zangen ergriffen und durch Relativbewegung der Zangen zu dem Rad die Aufhängung eines so hergestellten Aufgußbeutels vom Trägermaterialstrang abgetrennt wird. Vorteilhafterweise werden die Zangen zum Abtrennen der Aufhängung vom Trägermaterialstrang nach dem Greifen des Trägermaterialstrangs in Umlaufrichtung des Rades verschwenkt, wobei die Zangen in Umlaufrichtung des Rades beschleunigt werden, vorzugsweise über eine Kurvensteuerung. Vorteilhafterweise wird auch das Greifen über eine Kurvensteuerung realisiert.

Die vordere Naht der Quernaht der Kammern ist vorteilhafterweise derart ausgebildet, daß diese im wesentlichen V-fömig verläuft. Gemäß einem weiteren Merkmal der Erfindung werden beim Herstellen der Perforation des Trägermaterialstrangs im Bereich der Verbindung des Trägermaterialstrangs mit den Kammern seitlich von einem Mittelsteg zwei Ecken der Kammern ausgestanzt. Die Aufgußbeutel erhalten so eine besondere und gleichmäßige Kopfgestaltung.

Weitere Einzelheiten, Merkmale und Vorteile der Erfindung werden nachfolgend anhand des in den Figuren dargestellten Ausführungsbeispiels näher erläutert. Dabei zeigen:
- Fig. 1: ein Schema einer Vorrichtung zur Durchführung eines erfindungsgemäßen Verfahrens;
- Fig. 2 bis 9: jeweils eine Seitenansicht und eine Draufsicht auf das mit der Vorrichtung nach dem Verfahren hergestellte Produkt an den im Schema nach Figur 1 gekennzeichneten Stellen und
- Fig. 10: eine vergrößerte Darstellung einer Doppelnaht.

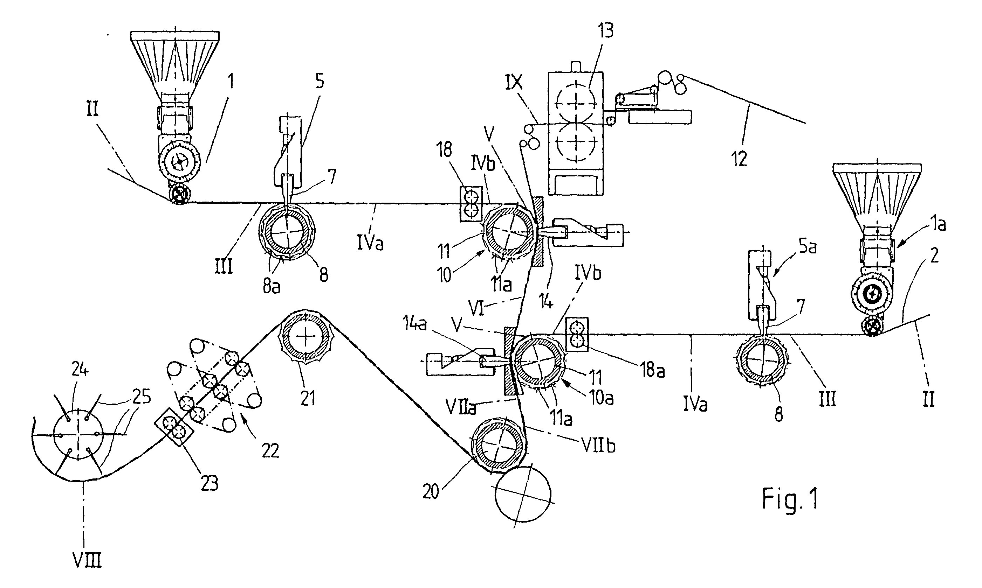

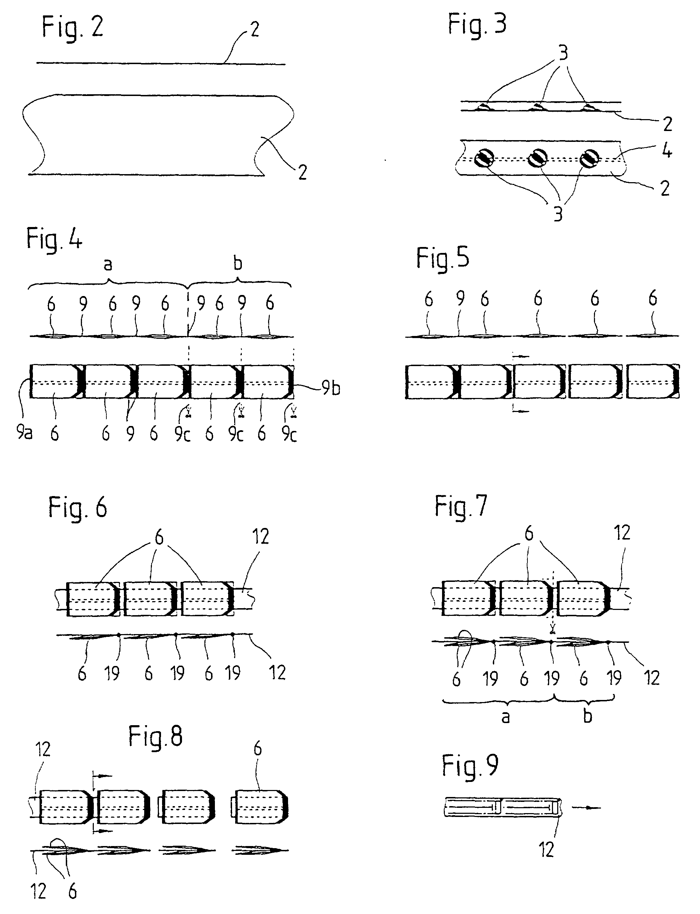

Die in Figur 1 schematisch dargestellte Vorrichtung zur Durchführung des Verfahrens umfaßt eine Dosiervorrichtung 1, die auf eine Filterpapierbahn 2 gemäß Figur 2 einzelne Substanzquanten 3 gemäß Figur 3 ablegt, die Filterpapierbahn 2 durch überlappendes Falten um ihre Längsachse zu einem Schlauch formt und durch eine in Figur 3 angedeutete Längsnaht 4 verschließt.

In einer Quersiegelstation 5 wird der Schlauch in einzelne allseits geschlossene Kammern 6 unterteilt. Zu diesem Zweck ist eine Sonotrode 7 zum Ultraschallschweißen vorgesehen, die mit einer Siegelwalze 8 zusammenwirkt. Die Siegelwalze 8 hat Ausnehmungen 8a für das in der jeweiligen Kammer 6 enthaltene Substanzquantum 3 und dreht sich mit einer der Geschwindigkeit der zugeführten Filterpapierbahn 2 entsprechenden Drehzahl.

Wie Figur 4 erkennen läßt, besteht die Quersiegelung aus einer Doppelnaht 9, die jeweils eine hintere Naht 9a und eine vordere Naht 9b umfaßt. Zwischen diesen Nähten 9a und 9b wird eine Perforation 9c seitens einer Querperforationsstation 18 ausgebildet. Der in Figur 4 mit a gekennzeichnete Bereich zeigt dabei den Kammerstrang vor und der in Figur 4 mit b gekennzeichnete Bereich den Kammerstrang nach dem Perforieren.

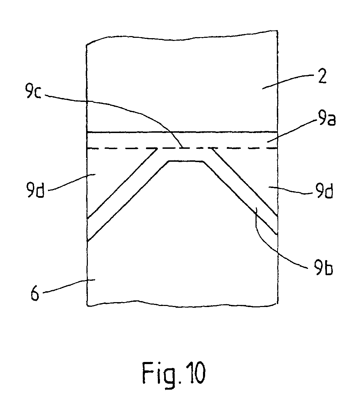

Figur 10 zeigt in einer Vergrößerung die durch Ultraschallschweißen ausgebildete Doppelnaht 9 umfassend die hintere Naht 9a der einen und die vordere Naht 9b der nachfolgenden Kammer 6, umfassend die zwischen beiden Nähten 9a und 9b liegende Perforation 9c. Vorliegend werden mit der Doppelnaht 9 zwei dreieckförmige Ecken 9d aus Filterpapiermaterial von der Kammer 6 separiert, die im Laufe des Verfahrens seitlich vom mittleren Steg der vorderen Naht 9b ausgestanzt werden. Die Perforation 9c erstreckt sich über die gesamte Breite der Kammer 6. Die vordere Naht 9b, die den Kopfbereich des Aufgußbeutels bildet, hat im wesentlichen die Form eines V mit dem mittleren Steg als Scheitelpunkt.

Der aus einer in einzelne Kammern 6 unterteilten Filterpapierbahn 2 ausgebildete Kammerstrang wird nunmehr einer Kammertrennstation 10 zugeführt, in der die Kammern 6 des Kammerstrangs an der Perforation 9c durch Auseinanderziehen getrennt werden. Zu diesem Zweck weist die Kammertrennstation 10 ein mit Ausnehmungen 11 a für einzelne Kammern 6 versehenes Rad 11 auf. Die Kammern 6 des Kammerstrangs werden von seitlich des Rades 11 angeordneten Zangen ergriffen und durch Relativbewegung der Zangen zu dem Rad 11 Kammern 6 nach und nach vom Kammerstrang abgetrennt. Dabei werden die in Umlaufrichtung des Rades 11 schwenkbar gelagerten Zangen zum Erzeugen der Relativbewegung in Umlaufrichtung des Rades 11 über eine Kurvensteuerung beschleunigt. Über eine weitere am Rad 11 angeordnete Kurve wird das Greifen der Zangen gesteuert. Die Kurvensteuerungen sind dabei derart aufeinander abgestimmt, daß in Umlaufrichtung des Rades 11 vordere Zangen eine abzutrennende Kammer 6 greifen, bevor die in Umlaufrichtung nachfolgenden Zangen die nachfolgende Kammer 6 des Kammerstrangs greifen und die vorderen Zangen in Umlaufrichtung des Rades 11 beschleunigt werden, wenn die hinteren Zangen die nachfolgende Kammer 6 des Kammerstrangs greifen.

Figur 5 zeigt einen Ausschnitt des der Kammertrennstation 10 zugeführten Kammerstrangs. Dabei wird die mittlere Kammer 6 von der nachfolgenden Kammer 6 des Kammerstrangs abgetrennt. Die in Figur 5 rechts dargestellten Kammern 6 sind bereits abgetrennt und werden von den Zangen des Rades 11 mit dem umlaufenden Rad 11 zum Verbinden dieser Kammern 6 mit einem Trägermaterialstrang 12 an einer weiteren im Bereich des Rades 11 angeordneten Sonotrode 14 vorbeigeführt. Die in Figur 5 links dargestellten Kammern 6 des Kammerstrangs werden bereits von Zangen des Rades 11 gegriffen. Die in Figur 5 nach rechts gerichteten Pfeile im Bereich der hinteren Naht 9a der mittleren Kammer 6 deuten die beschleunigte Bewegung der Zangen und damit der mittleren Kammer 6 zum Abtrennen derselben an. Wie anhand von Figur 1 zu erkennen, wird der Trägermaterialstrang 12 dem Rad 11 zugeführt, welcher in einer Durchlaufstation 13 längsgeschnitten und perforiert wird wie in Figur 9 dargestellt. Die vereinzelten Kammern 6 werden mit der Sonotrode 14 mittels Ultraschallschweißen im Bereich des mittleren Steges der vorderen Naht 9b mit dem Trägermaterialstrang 12 verbunden, wie in Figur 6 dargestellt. Damit sind, wie dies die Figur 6 zeigt, an einer Seite des Trägermaterialstrangs 12 eine Reihe von Kammern 6 im gleichen Abstand voneinander befestigt, vorliegend mittels Schweißpunkten 19.

In dem Schema nach Figur 1 ist zu erkennen, daß durch eine Dosiervorrichtung 1a auf einer weiteren Filterpapierbahn 2 Substanzquanten abgelegt werden und die Filterpapierbahn 2 zu einem Schlauch geformt wird, der in einer weiteren Querschweißstation 5a in einzelne Kammern 6 unterteilt wird. Auch in dieser Querschweißstation 5a wird mittels einer Sonotrode 7 und einer Siegelwalze 8 durch Ultraschallschweißen eine Doppelnaht 9 erzeugt, die aus einer hinteren Naht 9a und einer vorderen Naht 9b besteht. Über eine Querperforationsstation 18a wird die Doppelnaht 9 zwischen der hinteren Naht 9a und der vorderen Naht 9b mit einer Perforation 9c versehen. An der mit IVb gekennzeichneten Stelle liegt somit ein weiterer Kammerstrang vor, der nunmehr einer der Kammertrennstation 10 entsprechenden Kammertrennstation 10a zugeführt wird. In dieser Kammertrennstation 10a werden die Kammern 6 des zweiten Kammerstrangs ebenfalls einem kontinuierlich umlaufenden, mit Ausnehmungen 11a für einzelne Kammern 6 versehenen Rad 11 zugeführt, wobei die Längsseiten der vom Kammerstrang zu trennenden Kammern 6 von seitlich des Rades 11 angeordneten Zangen ergriffen und durch Relativbewegung der Zangen zu dem Rad 11 eine abzutrennende Kammer 6 vom Kammerstrang abgetrennt wird. Entsprechend werden die durch Abtrennen vereinzelten Kammern 6 des zweiten Kammerstrangs durch Ultraschallschweißen mittels einer Sonotrode 14a an die freie Seite des Trägermaterialstrangs 12 im Bereich des mittleren Steges ihrer vorderen Naht 9b angeschweißt. An der mit Vlla gekennzeichneten Stelle liegt somit gemäß Figur 7 ein Trägermaterialstrang 12 vor, an dessen beiden Seiten Kammern 6 mittels Schweißpunkten 19 angeschweißt sind. Der so beidseitig mit Kammern 6 versehene Kammerstrang wird einer Stanzstation 20 zugeführt, bestehend aus einem kontinuierlich umlaufenden Rad mit auf dem Umfang angeordneten Stanzwerkzeugen. Dabei werden zwei dreieckförmige Ecken 9d seitlich vom mittleren Steg der vorderen Naht 9b der Kammern 6 ausgestanzt.

Über eine Umlenkrolle 21 wird der beidseitig mit Kammern 6 versehene Trägermaterialstrang 12 über ein druckmarkengesteuertes Doppelriemensystem 22 mit voneinander beabstandeten Nocken zum Greifen des Trägermaterialstrangs 12 versehenen Riemen transportiert. Dabei transportieren wechselweise die Nocken des einen Riemens den Trägermaterialstrang 12 während die Nocken des zweiten Riemens zur anschließenden Übernahme des Weitertransports in eine Transportposition gebracht werden. Der erste Riemen des Doppelriemensystems 22 fährt druckmarkengesteuert über Servomotoren in Transportposition und transportiert den mit Kammern 6 versehenen Trägermaterialstrang ein Stück weiter. In dieser Zeit sind die zum Transport vorgesehenen Nocken des zweiten Riemens außer Eingriff und werden rechtzeitig in die den weiteren Transport des mit Kammern 6 versehenen Trägermaterialstrangs 12 vorgegebene Weitertransportposition verbracht. Dabei wird die Geschwindigkeit des zweiten Riemens über die Servomotoren geregelt, wobei die Servomotoren über einen optischen Sensor Druckmarken auf dem Trägermaterialstrang 12 erfassen und die Geschwindigkeit des zweiten Riemens entsprechend anpassen, so daß die Nocken des zweiten Riemens in Transportposition gebracht werden und den mit Kammern 6 versehenen Trägermaterialstrang 12 erfassen und transportieren. Sobald der mit Kammern 6 versehene Trägermaterialstrang 12 von den Nocken des zweiten Riemens erfaßt wird, sind die Nocken des ersten Riemens außer Eingriff und werden entsprechend in ihre neue Greifposition verbracht.

Schließlich wird der beidseitig mit Kammern 6 versehene Trägermaterialstrang 12 einer Querperforationsstation 23 zugeführt, die den Trägermaterialstrang im Bereich zwischen den voneinander beabstandeten und nacheinander folgenden Kammern 6 perforiert.

Nach dem Querperforieren seitens der Querperforationsstation 23 wird der beidseitig mit Kammern 6 versehene Trägermaterialstrang 12 einem kontinuierlich umlaufenden Rad 24 zugeführt, wobei der Trägermaterialstrang 12 von am Rad 24 angeordneten Zangen 25 ergriffen und durch Relativbewegung der Zangen 25 zu dem Rad der Trägermaterialstrang 12 an der Perforation auseinandergezogen wird. Die Zangen greifen den Trägermaterialstrang 12 dabei im Bereich der vorderen Naht 9b der Kammern 6, wobei die in Umlaufrichtung des Rades 24 vorderen Zangen zum Erzeugen einer Relativbewegung in Umlaufrichtung beschleunigt werden, wenn die in Umlaufrichtung nachfolgenden Zangen den Trägermaterialstrang 12 im Bereich der nachfolgenden Kammern 6 gegriffen haben. Sowohl die Erzeugung der Relativbewegung als auch das Greifen der Zangen 25 wird über separate aufeinander abgestimmte Kurvenverläufe seitens des Rades 24 gesteuert.

### Bezugszeichenliste

- 1: Dosiervorrichtung
- 1a: Dosiervorrichtung
- 2: Filterpapierbahn
- 3: Substanzquantum
- 4: Längsnaht
- 5: Quersiegelstation (Ultraschallschweißen)
- 5a: Quersiegelstation (Ultraschallschweißen)
- 6: Kammer
- 7: Sonotrode (Ultraschallschweißen)
- 8: Siegelwalze
- 8a: Ausnehmung
- 9: Doppelnaht
- 9a: hintere Naht
- 9b: vordere Naht
- 9c: Perforation
- 9d: Ecke
- 10: Kammertrennstation
- 10a: Trennstation
- 11: Rad
- 11a: Ausnehmung
- 12: Trägermaterialstrang
- 13: Durchlaufstation
- 14: Sonotrode (Ultraschallschweißen)
- 18: Querperforationsstation
- 18a: Querperforationsstation
- 19: Schweißpunkt
- 20: Stanzstation
- 21: Umlenkrolle
- 22: Doppelriemensystem
- 23: Querperforation
- 24: Zangenrad
- 25: Zange

## Patentansprüche

1. Verfahren zur kontinuierlichen Herstellung von Aufgußbeuteln, insbesondere zur Bereitung von Tee, mit einer Aufhängung aus bahnförmigem Trägermaterial und mit wenigstens einer aus Filterpapiermaterial bestehenden, allseitig geschlossenen, mindestens ein Substanzquantum enthaltenden und mit der Aufhängung verbundenen Kammer **(6)** durch Ablegen einzelner Substanzquanten auf einer Filterpapierbahn **(2)**, Bildung eines Schlauches, Ausbildung wenigstens eines Kammerstrangs aus nacheinander zusammenhängenden, durch eine Quernaht jeweils geschlossenen, ein Substanzquantum enthaltenden Kammern **(6)**, wobei die Quernaht zugleich die hintere Naht **(9a)** der einen und die vordere Naht **(9b)** der nachfolgenden Kammer **(6)** ist und eine zwischen beiden Nähten **(9a, 9b)** liegende Perforation **(9c)** umfaßt, an der die Kammern **(6)** im Verlauf des Verfahrens getrennt werden, Trennen einer Kammer **(6)** vom Kammerstrang, Verbinden der Kammer **(6)** des Kammerstrangs mit einem Trägermaterialstrang **(12)** und Trennen der Aufhängung vom Trägermaterialstrang (**12**),
**dadurch gekennzeichnet,daß**
zum Trennen einer Kammer **(6)** von dem Kammerstrang der kontinuierlich bewegte Kammerstrang an einer vorbestimmten Position nahe der Perforation **(9c)** der zu trennenden Kammer **(6)** gegriffen wird und **die gegriffene, vom Kammerstrang abzutrennende Kammer (6)** einer Beschleunigung in Bewegungsrichtung des Kammerstrangs unterzogen wird, derart, daß durch die Relativbewegung die Kammer **(6)** vom Kammerstrang abgetrennt wird.

2. Verfahren nach Anspruch 1, **dadurch gekennzeichnet, daß** zum Trennen einer Kammer (6) von einem Kammerstrang der Kammerstrang einem kontinuierlich umlaufenden, mit Ausnehmungen (11a) für einzelne Kammern (6) versehenen Rad (11) zugeführt, die Längsseiten der vom Kammerstrang zu trennenden Kammer (6) von seitlich des Rades (11) angeordneten Zangen ergriffen und durch Relativbewegung der Zangen zu dem Rad (11) die Kammer (6) vom Kammerstrang abgetrennt wird.

3. Verfahren nach Anspruch 1 oder Anspruch 2, **dadurch gekennzeichnet, daß** die Zangen in Umlaufrichtung des Rades (11) schwenkbar sind.

4. Verfahren nach Anspruch 2 oder Anspruch 3, **dadurch gekennzeichnet, daß** die Zangen zum Erzeugen der Relativbewegung in Umlaufrichtung des Rades (11) beschleunigt werden.

5. Verfahren nach Anspruch 4, **dadurch gekennzeichnet, daß** die Zangen über eine Kurvensteuerung beschleunigt werden.

6. Verfahren nach einem der Ansprüche 2 bis 5, **dadurch gekennzeichnet, daß** in Umlaufrichtung des Rades (11) vordere Zangen die abzutrennende Kammer (6) greifen, bevor die in Umlaufrichtung nachfolgenden Zangen die nachfolgende Kammer (6) des Kammerstrangs greifen und die vorderen Zangen in Umlaufrichtung des Rades (11) beschleunigt werden, wenn die hinteren Zangen die nachfolgende Kammer (6) des Kammerstrangs greifen.

7. Verfahren nach einem der Ansprüche 2 bis 6, **dadurch gekennzeichnet, daß** das Greifen der Zangen über eine Kurvensteuerung erfolgt.

8. Verfahren nach einem der Ansprüche 2 bis 7, **dadurch gekennzeichnet, daß** die Kammern (6) beim Trennen in den Ausnehmungen (11a) des Rades (11) gehalten werden, vorzugsweise durch Luftansaugung mittels Unterdruck.

9. Verfahren nach einem der Ansprüche 2 bis 8, **dadurch gekennzeichnet, daß** die Kammern (6) mit oder nach dem Verbinden mit dem die Aufhängung bildenden Trägermaterialstrang (12) aus den Ausnehmungen (11a) des Rades (11) herausgedrückt werden, vorzugsweise durch Herausblasen.

10. Verfahren nach einem der Ansprüche 1 bis 9, **dadurch gekennzeichnet, daß** die Quernaht (9) durch Verschweißen hergestellt wird, bevorzugt mittels Ultraschall.

11. Verfahren nach einem der Ansprüche 1 bis 10, **dadurch gekennzeichnet, daß** die zwischen den beiden Nähten (9a, 9b) der Quernaht (9) liegende Perforation (9c) mit oder nach dem Ausbilden der Quernaht (9) ausgebildet wird.

12. Verfahren nach einem der Ansprüche 1 bis 11, **dadurch gekennzeichnet, daß** die Perforation (9c) durch Ultraschall hergestellt wird, vorzugsweise mit der Quernaht (9).

13. Verfahren nach einem der Ansprüche 1 bis 11, **dadurch gekennzeichnet, daß** die Perforation (9c) durch wenigstens ein rotierendes Messer mit einer an separaten Stellen unterbrochenen Schneide ausgebildet wird.

14. Verfahren nach einem der Ansprüche 2 bis 13, **dadurch gekennzeichnet, daß** dem Rad (11) der im Verlauf des Verfahrens die Aufhängung des Aufgußbeutels ausbildende Trägermaterialstrang (12) zugeführt wird, mit dem die abzutrennende Kammer (6) vor oder mit dem Abtrennen durch Schweißen verbunden wird, vorzugsweise mittels Ultraschall.

15. Verfahren nach einem der vorhergehenden Ansprüche, **dadurch gekennzeichnet, daß** die Kammern (6) mit einem Abstand zueinander mit dem Trägermaterialstrang (12) verbunden werden.

16. Verfahren nach Anspruch 15, **dadurch gekennzeichnet, daß** der Trägermaterialstrang (12) dem Rad (11) mit einer größeren Geschwindigkeit zugeführt wird als der Kammerstrang.

17. Verfahren nach einem der Ansprüche 1 bis 16, **dadurch gekennzeichnet, daß** eine der Kammern (6) eines ersten Kammerstrangs entlang einer zu bildenden Kante mit einer Seite des Trägermaterialstrangs (12) und eine der Kammern (6) eines zweiten Kammerstrangs entlang der zu bildenden Kante mit der gegenüberliegenden Seite des Trägermaterialstrangs (12) verbunden wird.

18. Verfahren nach einem der Ansprüche 1 bis 17, **dadurch gekennzeichnet, daß** zunächst eine der Kammern (6) eines ersten Kammerstrangs entlang einer zu bildenden Kante mit einer Seite des Trägermaterialstrangs (12) verbunden und anschließend eine der Kammern (6) eines zweiten Kammerstrangs entlang der zu bildenden Kante mit der gegenüberliegenden Seite des Trägermaterialstrangs (12) verbunden wird.

19. Verfahren nach einem der vorhergehenden Ansprüche, **dadurch gekennzeichnet, daß** zum Transport der mit dem Trägermaterialstrang (12) verbundenen Kammern (6) der Trägermaterialstrang (12) an bestimmten Stellen gegriffen und in Transportrichtung gezogen wird.

20. Verfahren nach Anspruch 19, **dadurch gekennzeichnet, daß** der Trägermaterialstrang (12) im Bereich der Verbindung mit den Kammern (6) gegriffen wird.

21. Verfahren nach Anspruch 19 oder Anspruch 20, **dadurch gekennzeichnet, daß** der Trägermaterialstrang (12) im Bereich der Verbindung jeder zweiten Kammer (6) gegriffen wird, bevorzugt im Bereich der Verbindung jeder vierten Kammer (6).

22. Verfahren nach einem der Ansprüche 19 bis 21, **dadurch gekennzeichnet, daß** zum Transport ein mit Nocken versehener Riemen verwendet wird, dessen Nocken den Trägermaterialstrang (12) greifen und durch Bewegung des Riemens transportieren.

23. Verfahren nach einem der Ansprüche 19 bis 22, **dadurch gekennzeichnet, daß** zum Transport ein gesteuertes Doppelriemensystem (22) verwendet wird, wobei wechselweise die Nocken eines Riemens in eine Greifposition gebracht werden und den Trägermaterialstrang (12) erfassen, während die Nocken des anderen Riemens den Trägermaterialstrang (12) transportieren.

24. Verfahren nach Anspruch 23, **dadurch gekennzeichnet, daß** die Riemenbewegung druckmarkengesteuert ist, wobei die Druckmarken bevorzugt auf dem Trägermaterialstrang (12) angeordnet sind.

25. Verfahren nach einem der Ansprüche 1 bis 24, **dadurch gekennzeichnet, daß** der Trägermaterialstrang (12) im Bereich der Verbindung mit den Kammern (6) perforiert wird.

26. Verfahren nach Anspruch 25, **dadurch gekennzeichnet, daß** mit, vor oder nach dem Herstellen der Perforation seitlich von einem Mittelsteg zwei Ecken (9d) der Kammern (6) ausgestanzt werden und die vordere Naht (9b) der Quernaht (9) der Kammern (6) im wesentlichen V-förmig verläuft.

27. Verfahren nach Anspruch 25 oder Anspruch 26, **dadurch gekennzeichnet, daß** der kontinuierlich bewegte Trägermaterialstrang (12) an einer vorbestimmten Position nahe der Perforation gegriffen und einer Beschleunigung in Bewegungsrichtung des Trägermaterialstrangs (12) unterzogen wird, derart, daß durch die Relativbewegung die Aufhängung eines so hergestellten Aufgußbeutels vom Trägermaterialstrang (12) abgetrennt wird.

28. Verfahren nach einem der Ansprüche 25 bis 27, **dadurch gekennzeichnet, daß** der Trägermaterialstrang (12) einem kontinuierlich umlaufenden Rad (24) zugeführt, der Trägermaterialstrang (12) von am Rad (24) angeordneten Zangen (25) ergriffen und durch Relativbewegung der Zangen (25) zu dem Rad (24) die Aufhängung eines so hergestellten Aufgußbeutels vom Trägermaterialstrang (12) abgetrennt wird.

29. Verfahren nach Anspruch 28, **dadurch gekennzeichnet, daß** die Zangen (25) zum Abtrennen der Aufhängung vom Trägermaterialstrang (12) nach dem Greifen des Trägermaterialstrangs(12) in Umlaufrichtung des Rades (24) verschwenkt werden.

30. Verfahren nach Anspruch 28 oder Anspruch 29, **dadurch gekennzeichnet, daß** die Zangen (25) in Umlaufrichtung des Rades (24) beschleunigt werden.

31. Verfahren nach Anspruch 30, **dadurch gekennzeichnet, daß** die Zangen (25) über eine Kurvensteuerung beschleunigt werden.

## Claims

1. Method for continuously manufacturing infusion bags, in particular for preparing tea, with a suspension of web-shaped carrier material and with at least one compartment (6), which consists of filter paper material, is closed all-round, contains at least one substance quantity and is joined to the suspension, by depositing individual substance quantities on a filter paper web (2), forming a tube, creating at least one compartment strand of successively coherent compartments (6) each closed by a transverse seam and containing a substance quantity, wherein the transverse seam is at the same time the rear seam (9a) of one and the front seam (9b) of the following compartment (6) and comprises perforations (9c) which lie between the two seams (9a, 9b) and at which the compartments (6) are separated in the course of the method, separating a compartment (6) from the compartment strand, joining the compartment (6) of the compartment strand to a carrier material strand (12) and separating the suspension from the carrier material strand (12),
**characterised in that**, in order to separate a compartment (6) from the compartment strand, the continuously moving compartment strand is gripped at a predetermined position near the perforations (9c) of the compartment (6) to be separated and the gripped compartment (6) to be separated from the compartment strand is accelerated in the direction of movement of the compartment strand such that the compartment (6) is separated from the compartment strand by the relative movement.

2. Method according to Claim 1, **characterised in that**, in order to separate a compartment (6) from a compartment strand, the compartment strand is brought up to a continuously rotating wheel (11), which is provided with recesses (11a) for individual compartments, the longitudinal sides of the compartment (6) to be separated from the compartment strand are gripped by tongs disposed laterally of the wheel (11), and the compartment (6) is separated from the compartment strand by a movement of the tongs relative to the wheel (11).

3. Method according to Claim 1 or Claim 2, **characterised in that** the tongs can be pivoted in the direction of rotation of the wheel (11).

4. Method according to Claim 2 or Claim 3, **characterised in that** the tongs are accelerated to produce the relative movement in the direction of rotation of the wheel (11).

5. Method according to Claim 4, **characterised in that** the tongs are accelerated by a cam control.

6. Method according to any one of Claims 2 to 5, **characterised in that** tongs which are at the front in the direction of rotation of the wheel (11) grip the compartment (6) to be separated before the tongs following in the direction of rotation grip the following compartment (6) of the compartment strand, and the front tongs are accelerated in the direction of rotation of the wheel (11) when the rear tongs grip the following compartment (6) of the compartment strand.

7. Method according to any one of Claims 2 to 6, **characterised in that** the gripping action of the tongs is effected by a cam control.

8. Method according to any one of Claims 2 to 7, **characterised in that** the compartments (6) are held in the recesses (11a) of the wheel (11) when separation takes place, preferably through an air intake by means of underpressure.

9. Method according to any one of Claims 2 to 8, **characterised in that** the compartments (6) are pushed out of the recesses (11a) of the wheel (11), preferably by being blown out, when or after being joined to the carrier material strand (12) forming the suspension.

10. Method according to any one of Claims 1 to 9, **characterised in that** the transverse seam (9) is made by welding, preferably by means of ultrasound.

11. Method according to any one of Claims 1 to 10, **characterised in that** the perforations (9c) lying between the two seams (9a, 9b) of the transverse seam (9) are created when or after the transverse seam (9) is created.

12. Method according to any one of Claims 1 to 11, **characterised in that** the perforations (9c) are made by ultrasound, preferably at the same time as the transverse seam (9).

13. Method according to any one of Claims 1 to 11, **characterised in that** the perforations (9c) are created by at least one rotating knife with a cutting edge which is interrupted at separate locations.

14. Method according to any one of Claims 2 to 13, **characterised in that** the carrier material strand (12) which creates the suspension of the infusion bag in the course of the method and to which the compartment (6) which is to be separated is joined before or after separation by welding, preferably by means of ultrasound, is brought up to the wheel (11).

15. Method according to any one of the preceding Claims, **characterised in that** the compartments (6) are joined to the carrier material strand (12) at a spacing from one another.

16. Method according to Claim 15, **characterised in that** the carrier material strand (12) is brought up to the wheel (11) at a higher speed than the compartment strand.

17. Method according to any one of Claims 1 to 16, **characterised in that** one of the compartments (6) of a first compartment strand is joined along an edge to be formed to one side of the carrier material strand (12) and one of the compartments (6) of a second compartment strand is joined along the edge to be formed to the opposite side of the carrier material strand (12).

18. Method according to any one of Claims 1 to 17, **characterised in that** one of the compartments (6) of a first compartment strand is firstly joined along an edge to be formed to one side of the carrier material strand (12) and one of the compartments (6) of a second compartment strand is then joined along the edge to be formed to the opposite side of the carrier material strand (12).

19. Method according to any one of the preceding Claims, **characterised in that**, in order to transport the compartments (6) joined to the carrier material strand (12), the carrier material strand (12) is gripped at certain locations and pulled in the transport direction.

20. Method according to Claim 19, **characterised in that** the carrier material strand (12) is gripped in the region of the join with the compartments (6).

21. Method according to Claim 19 or Claim 20, **characterised in that** the carrier material strand (12) is gripped in the region of the join of each second compartment (6), preferably in the region of the join of each fourth compartment (6).

22. Method according to any one of Claims 19 to 21, **characterised in that** a belt which is provided with spaced dogs is used for transport, the dogs of which belt grip the carrier material strand (12) and transport it through the belt movement.

23. Method according to any one of Claims 19 to 22, **characterised in that** a controlled twin-belt system (22) is used for transport, with the dogs of one belt alternately being brought into a gripping position and gripping the carrier material strand (12) while the dogs of the other belt transport the carrier material strand (12).

24. Method according to Claim 23, **characterised in that** the belt movement is controlled by print marks, wherein the print marks are preferably disposed on the carrier material strand (12).

25. Method according to any one of Claims 1 to 24, **characterised in that** the carrier material strand (12) is perforated in the region of the join with the compartments (6).

26. Method according to Claim 25, **characterised in that** two corners (9d) of the compartments (6) are punched out laterally of a central web when, before or after the perforations are made, and the front seam (9b) of the transverse seam (9) of the compartments (6) extends essentially in the shape of a V.

27. Method according to Claim 25 or Claim 26, **characterised in that** the continuously moving carrier material strand (12) is gripped at a predetermined position near the perforations and accelerated in the direction of movement of the carrier material strand (12) such that the suspension of an infusion bag which is thus made is separated from the carrier material strand (12) by the relative movement.

28. Method according to any one of Claims 25 to 27, **characterised in that** the carrier material strand (12) is brought up to a continuously rotating wheel (24), the carrier material strand (12) is gripped by tongs (25) disposed at the wheel (24), and the suspension of an infusion bag which is thus made is separated from the carrier material strand (12) by a movement of the tongs (25) relative to the wheel (24).

29. Method according to Claim 28, **characterised in that**, in order to separate the suspension from the carrier material strand (12), the tongs (25) are pivoted in the direction of rotation of the wheel (24) after the carrier material strand (12) has been gripped.

30. Method according to Claim 28 or Claim 29, **characterised in that** the tongs (25) are accelerated in the direction of rotation of the wheel (24).

31. Method according to Claim 30, **characterised in that** the tongs (25) are accelerated by a cam control.

## Revendications

1. Procédé de fabrication continue de sachets d'infusion, destinés notamment à la préparation de thé, comportant une suspension en matériau de support en forme de bande, et au moins un compartiment (6) constitué de matériau de papier filtrant fermé de tous côtés, contenant au moins un quantum de substance et relié à la suspension, et ce par dépose de quanta individuels de substance sur une bande de papier filtrant (2), formation d'un boyau, réalisation d'au moins une bande continue de compartiments constituée de compartiments (6) successifs .adhérant ensemble, qui sont fermés par un scellement transversal et contiennent chacun un quantum de substance, le scellement transversal étant simultanément le scellement arrière (9a) de l'un des compartiments et le scellement avant (9b) du compartiment (6) suivant, et comportant une perforation (9c) située entre les deux scellements (9a, 9b), au niveau de laquelle les compartiments (6) sont séparés au cours du procédé, séparation d'un compartiment (6) de la bande continue de compartiments, liaison du compartiment (6) de la bande continue de compartiments avec une bande continue de matériau de support (12), et séparation de la suspension de la bande continue de matériau de support (12),
**caractérisé en ce que**,
pour la séparation d'un compartiment (6) de la bande continue de compartiments, la bande continue de compartiments se déplaçant en continu est saisie dans une position prédéterminée à proximité de la perforation (9c) du compartiment (6) à séparer, et le compartiment (6) saisi à séparer de la bande continue de compartiments est soumis à une accélération dans le sens du déplacement de la bande continue de compartiments, de telle sorte que le compartiment (6) soit séparé de la bande continue de compartiments par le mouvement relatif.

2. Procédé selon la revendication 1, **caractérisé en ce que**, pour la séparation d'un compartiment (6) d'une bande continue de compartiments, la bande continue de compartiments est amenée à une roue (11) tournant en continu qui est munie d'évidements (11a) pour des compartiments (6) individuels, les côtés longitudinaux du compartiment (6) à séparer de la bande continue de compartiments sont saisis par des pinces disposées latéralement à la roue (11), et le compartiment (6) est séparé de la bande continue de compartiments par le mouvement relatif des pinces par rapport à la roue (11).

3. Procédé selon la revendication 1 ou la revendication 2, **caractérisé en ce que** les pinces peuvent être pivotées dans le sens de rotation de la roue (11).

4. Procédé selon la revendication 2 ou la revendication 3, **caractérisé en ce que**, pour engendrer le mouvement relatif, les pinces sont accélérées dans le sens de rotation de la roue (11).

5. Procédé selon la revendication 4, **caractérisé en ce que** les pinces sont accélérées par l'intermédiaire d'une commande à came.

6. Procédé selon l'une quelconque des revendications 2 à 5, **caractérisé en ce que** les pinces avant dans le sens de rotation de la roue (11) saisissent le compartiment (6) à séparer avant que les pinces suivantes dans le sens de rotation saisissent le compartiment (6) suivant de la bande continue de compartiments, et **en ce que** les pinces avant sont accélérées dans le sens de rotation de la roue (11) lorsque les pinces arrière saisissent le compartiment (6) suivant de la bande continue de compartiments.

7. Procédé selon l'une quelconque des revendications 2 à 6, **caractérisé en ce que** la saisie par les pinces est effectuée par l'intermédiaire d'une commande à came.

8. Procédé selon l'une quelconque des revendications 2 à 7, **caractérisé en ce que** les compartiments (6) sont retenus dans les évidements (11a) de la roue (11) lors de la séparation, de préférence par aspiration d'air au moyen de dépression.

9. Procédé selon l'une quelconque des revendications 2 à 8, **caractérisé en ce que** les compartiments (6) sont poussés hors des évidements (11a) de la roue (11), de préférence par soufflage, avec ou après la liaison avec la bande continue de matériau de support (12) constituant la suspension.

10. Procédé selon l'une quelconque des revendications 1 à 9, **caractérisé en ce que** le scellement transversal (9) est effectué par soudage, de préférence au moyen d'ultrasons.

11. Procédé selon l'une quelconque des revendications 1 à 10, **caractérisé en ce que** la perforation (9c) située entre les deux scellements (9a, 9b) du scellement transversal (9) est réalisée avec ou après la réalisation du scellement transversal (9).

12. Procédé selon l'une quelconque des revendications 1 à 11, **caractérisé en ce que** la perforation (9c) est réalisée par ultrasons, de préférence avec le scellement transversal (9).

13. Procédé selon l'une quelconque des revendications 1 à 11, **caractérisé en ce que** la perforation (9c) est réalisée par au moins un couteau rotatif dont la lame est interrompue au niveau d'emplacements séparés.

14. Procédé selon l'une quelconque des revendications 2 à 13, **caractérisé en ce que** la bande continue de matériau de support (12) constituant au cours du procédé la suspension du sachet d'infusion, à laquelle le compartiment (6) à séparer est relié par soudage, de préférence au moyen d'ultrasons, avant ou avec la séparation, est amenée à la roue (11).

15. Procédé selon l'une quelconque des revendications précédentes, **caractérisé en ce que** les compartiments (6) sont reliés à la bande continue de matériau de support (12) en étant espacés entre eux.

16. Procédé selon la revendication 15, **caractérisé en ce que** la bande continue de matériau de support (12) est amenée à la roue (11) à une vitesse plus élevée que la bande continue de compartiments.

17. Procédé selon l'une quelconque des revendications 1 à 16, **caractérisé en ce que** l'un des compartiments (6) d'une première bande continue de compartiments est relié le long d'un bord à former à une face de la bande continue de matériau de support (12), et **en ce que** l'un des compartiments (6) d'une deuxième bande continue de compartiments est relié le long du bord à former à la face opposée de la bande continue de matériau de support (12).

18. Procédé selon l'une quelconque des revendications 1 à 17, **caractérisé en ce que** l'un des compartiments (6) d'une première bande continue de compartiments est d'abord relié le long d'un bord à former à une face de la bande continue de matériau de support (12), et **en ce que** l'un des compartiments (6) d'une deuxième bande continue de compartiments est ensuite relié le long du bord à former à la face opposée de la bande continue de matériau de support (12).

19. Procédé selon l'une quelconque des revendications précédentes, **caractérisé en ce que**, pour le transport des compartiments (6) reliés à la bande continue de matériau de support (12), la bande continue de matériau de support (12) est saisie au niveau d'emplacements définis, et tirée dans le sens du transport.

20. Procédé selon la revendication 19, **caractérisé en ce que** la bande continue de matériau de support (12) est saisie dans la zone de liaison des compartiments (6).

21. Procédé selon la revendication 19 ou la revendication 20, **caractérisé en ce que** la bande continue de matériau de support (12) est saisie dans la zone de liaison de chaque deuxième compartiment (6), de préférence dans la zone de liaison de chaque quatrième compartiment (6).

22. Procédé selon l'une quelconque des revendications 19 à 21, **caractérisé en ce qu'**une courroie munie de saillies est utilisée pour le transport, dont les saillies saisissent la bande continue de matériau de support (12) et la transportent par le mouvement de la courroie.

23. Procédé selon l'une quelconque des revendications 19 à 22, **caractérisé en ce qu'**un système commandé à double courroie (22) est utilisé pour le transport, les saillies de l'une des courroies étant déplacées en alternance dans une position de saisie et saisissant la bande continue de matériau de support (12), pendant que les saillies de l'autre courroie transportent la bande continue de matériau de support (12).

24. Procédé selon la revendication 23, **caractérisé en ce que** le mouvement des courroies est commandé en fonction de marques d'impression, les marques d'impression étant de préférence apposées sur la bande continue de matériau de support (12).

25. Procédé selon l'une quelconque des revendications 1 à 24, **caractérisé en ce que** la bande continue de matériau de support (12) est perforée dans la zone de la liaison des compartiments (6).

26. Procédé selon la revendication 25, **caractérisé en ce que**, avec, avant ou après la réalisation de la perforation, deux coins (9d) des compartiments (6) sont découpés latéralement d'une barrette centrale, et **en ce que** le scellement avant (9b) du scellement transversal (9) des compartiments (6) s'étend sensiblement en forme de V.

27. Procédé selon la revendication 25 ou la revendication 26, **caractérisé en ce que** la bande continue de matériau de support (12) se déplaçant en continu est saisie au niveau d'une position prédéterminée à proximité de la perforation, et soumise à une accélération dans le sens du déplacement de la bande continue de matériau de support (12), de sorte que la suspension d'un sachet d'infusion ainsi fabriqué soit détachée de la bande continue de matériau de support (12) par le mouvement relatif.

28. Procédé selon l'une quelconque des revendications 25 à 27, **caractérisé en ce que** la bande continue de matériau de support (12) est amenée à une roue (24) tournant en continu, **en ce que** la bande continue de matériau de support (12) est saisie par des pinces (25) disposées sur la roue (24), et **en ce que** la suspension d'un sachet d'infusion ainsi fabriqué est détachée de la bande continue de matériau de support (12) par le mouvement relatif des pinces (25) par rapport à la roue (24).

29. Procédé selon la revendication 28, **caractérisé en ce que**, pour détacher la suspension de la bande continue de matériau de support (12), les pinces (25) sont pivotées dans le sens de rotation de la roue (24) après la saisie de la bande continue de matériau de support (12).

30. Procédé selon la revendication 28 ou la revendication 29, **caractérisé en ce que** les pinces (25) sont accélérées dans le sens de rotation de la roue (24).

31. Procédé selon la revendication 30, **caractérisé en ce que** les pinces (25) sont accélérées par l'intermédiaire d'une commande à came.
